(19) Europäisches Patentamt
European Patent Office
Office européen des brevets

(11) **EP 1 021 072 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.⁷: **H05B 37/02**, H05B 41/295, H05B 41/18, H05B 41/16, H05B 37/00, H05B 41/36

(21) Anmeldenummer: **00100093.4**

(22) Anmeldetag: **07.01.2000**

(54) **Vorschaltgerät für eine Hochdruckgasentladungslampe in einem Kraftfahrzeug**

Ballast for discharge lamp on a vehicle

Ballast pour une lampe à décharge d'un véhicule

(84) Benannte Vertragsstaaten:
**AT BE CH CY DE DK ES FI FR GB GR IE IT LI LU MC PT**

(30) Priorität: **16.01.1999 DE 19901585**

(43) Veröffentlichungstag der Anmeldung:
**19.07.2000 Patentblatt 2000/29**

(73) Patentinhaber: **Hella KG Hueck & Co.**
**59552 Lippstadt (DE)**

(72) Erfinder: **Daub, wolfgang**
**59609 Anröchte (DE)**

(56) Entgegenhaltungen:
**EP-A- 0 307 065**      **US-A- 4 870 327**
**US-A- 5 363 020**

**Beschreibung**

Die Erfindung betrifft ein Vorschaltgerät für eine Hochdruckgasentladungslampe in einem Kraftfahrzeug mit einem primärgetakteten Gleichspannungswandler, bestehend aus einem Wandlertransformator, einem primärseitigen Wandlerschalter (Schalttransistor) und einer sekundärseitigen Gleichrichterschaltung, einer dem Gleichspannungswandler nachgeschalteten H-Brückenschaltung und einer Zündschaltung; einem Pulsweitenmodulator, dessen Ausgangssignal am Steuereingang des primärseitigen Wandlerschalters anliegt und einem Regler, dessen Regelgröße am Eingang des Pulsweitenmodulators anliegt und die Pulsweite des vom Pulsweitenmodulator erzeugten Ausgangssignals bestimmt.

Eine solche Schaltung ist aus der DE 41 26 865 A1 bekannt. Die DE 41 26 865 A1 beschreibt ein Vorschaltgerät, bei dem in der Zündübernahmephase die Hochdruckgasentladungslampe parallel aus dem Gleichspannungswandler und einer Boosterschaltung versorgt wird.

Bei diesem und ähnlichen Vorschaltgeräten besteht das Problem, daß die durch den Gleichspannungswandler vorgegebene maximale Leerlaufausgangsspannung einen konstanten Wert darstellt. Bei einem Vorschaltgerät mit einem Gleichspannungswandler bestimmen diese Leerlaufausgangsspannung und die maximale Ausgangsleistung, wie zuverlässig beim Start der Hochdruckgasentladungslampe der Zündfunke zum stabilen Bogen übernommen wird. Die maximale Wandlerausgangsleistung ist abhängig von der Betriebsspannung (bei begrenztem Betriebsstrom) und nimmt mit geringer werdender Betriebsspannung ab. Die Zuverlässigkeit der Übernahme des Zündfunkens zum stabilen Bogen nimmt somit bei geringer werdender Wandlerleistung ab. Hierdurch ist bei einer verringerten Betriebsspannung ein sicheres Zünden der Hochdruckgasentladungslampe nicht mehr in jedem Fall gewährleistet.

Der Erfindung liegt daher die Aufgabe zugrunde, auf einfache und kostengünstige Weise ein Vorschaltgerät für eine Hochdruckgasentladungslampe in einem Kraftfahrzeug so auszubilden, daß auch im Falle einer Versorgung des Vorschaltgerätes mit einer verringerten Betriebsspannung ein besonders zuverlässiges Zündverhalten der Hochdruckgasentladungslampe erzielt wird.

Diese Aufgabe wird erfindungsgemäß dadurch gelöst, daß der Gleichspannungswandler eine mit fallender Betriebsspannung ansteigende Leerlaufausgangsspannung abgibt.

Hierbei wird die Pulsweite als Funktion der Betriebsspannung so gesteuert, daß die Leerlaufausgangsspannung des Gleichspannungswandlers bei einer verringerten Betriebsspannung erhöht ist.

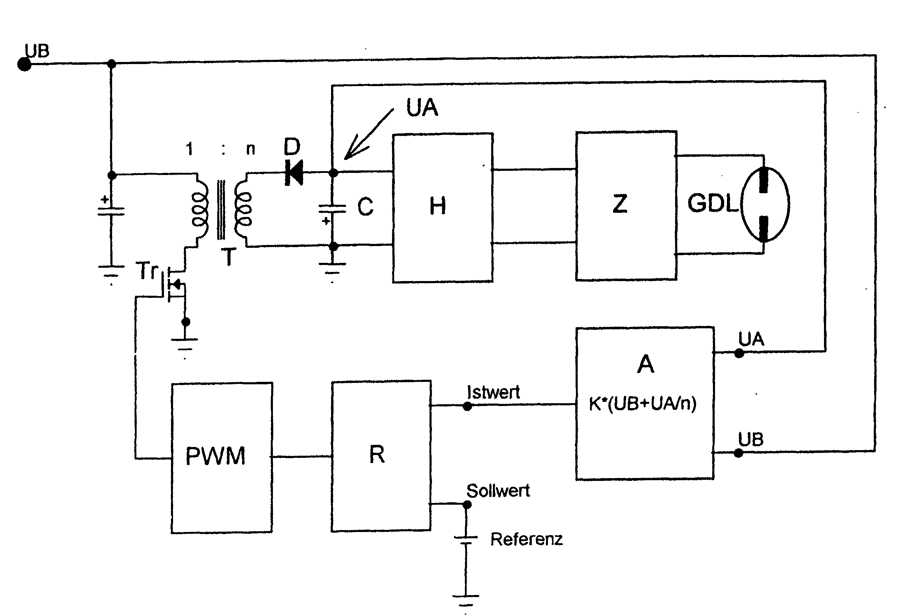

Im folgenden soll ein Ausführungsbeispiel des erfindungsgemäßen Vorschaltgerätes anhand der Zeichnung dargestellt und näher erläutert werden.

Die einzige Figur zeigt die Prinzipschaltung eines erfindungsgemäßen Vorschaltgerätes für eine Hochdruckgasentladungslampe.

Die Schaltung weist einen Gleichspannungswandler auf, dessen Ausgangsspannung (UA) über eine H-Brückenschaltung (H) wechselgerichtet einer Hochdruckgasentladungslampe (GDL) zugeführt wird. Die zum Zünden erforderliche Hochspannung erzeugt eine zwischen H-Brückenschaltung (H) und Hochdruckgasentladungslampe (GDL) geschaltete Überlagerungszündschaltung (Z).

Der Gleichspannungswandler ist hier als ein Sperrwandler mit einem Wandlertransformator (T), einem primärseitigen Schalter (Schalttransistor Tr), einer sekundärseitigen Gleichrichterschaltung (C,D) und einer Steuerelektronik (A, R, PWM) ausgeführt.

Das Vorschaltgerät ist im Leerlauffall (in der Startphase kurz vor dem Zünden der Hochdruckgasentladungslampe) ein Gleichspannungswandler mit geregelter Ausgangsspannung (UA), wobei die Ausgangsspannung (UA) nicht, wie bei vorbekannten Vorschaltgeräten üblich, ein konstanter Wert ist, sondern eine Funktion der Betriebsspannung (UB). Der Schalttransistor (Tr) wird von einem Pulsweitenmodulator (PWM) gesteuert, welcher in Abhängigkeit von der Regelgröße des Reglers (R) die Pulsweite steuert. Die Regelgröße wird aus einem Sollwert-Istwert-Vergleich abgeleitet, wobei der Sollwert eine Referenzspannung (Referenz) ist, welche proportional zur maximal zulässigen Sperrspannung des Schalttransistors (Tr) (oder der Gleichrichterdiode D) ist. Der Regler (R) sorgt dafür, daß der Schalttransistor (Tr) mit seiner maximal zulässigen Spannung betrieben wird, und zwar unabhängig von der Betriebsspannung (UB). Es wird also immer die maximal mögliche Ausgangsspannung (UA) erreicht, wobei die Ausgangsspannung (UA), wie gewünscht, mit fallender Betriebsspannung (UB) steigt.

Das Vorschaltgerät kann auf besonders einfache Weise derart ausgeführt sein, daß der Regler (R) eine Regelgröße erzeugt, die abhängig von der Differenz zwischen einem Istwert und einem Sollwert ist, wobei der Sollwert ein konstanter Referenzspannungswert ist und der Istwert aus einer Verknüpfung aus der Ausgangsspannung (UA) des Gleichspannungswandlers und der Betriebsspannung (UB) gebildet ist. Weiterhin kann vorteilhafterweise eine Addierschaltung (A) vorgesehen sein, die die Ausgangsspannung (UA) des Gleichspannungswandlers und die Betriebsspannung (UB) gemäß der Beziehung:

$$Istwert = K * ( UB + UA / n )$$

mit

K: konstanter Faktor
n: Übersetzungsverhältnis des Wandlertransformators

zu dem Istwert verknüpft.

Hierin entspricht die Summe UB+UA/n der Spannung am abgeschalteten Schalttransistor (Tr). Die Referenzspannung (Referenz) ist dabei so gewählt, daß die maximale Sperrspannung am Schalttransistor (Tr) auf keinen Fall überschritten wird. Die Konstante K dient zur Anpassung des Istwerts an die Referenzspannung (Referenz).

Die bisherigen Überlegungen gehen davon aus, daß die maximale Sperrspannung des primärseitigen Wandlerschalters (Schalttransistor Tr) eher erreicht wird als die maximale Sperrspannung der sekundärseitigen Diode (D) und insofern die für die Auslegung der Schaltung kritische Größe darstellt. Im umgekehrten Fall wird entsprechend die Regelung der Pulsweite so angepaßt, daß die an der Diode (D) anliegende Spannung, welche sich nach der Beziehung n*UB+UA bestimmt, die maximale Sperrspannung der Diode (D) nicht überschreitet. Durch Vergleich dieser Beziehungen ist leicht erkennbar, daß für diesen Fall lediglich die Größe K mit einem Faktor 1/n zu modifizieren ist.

**Patentansprüche**

1. Vorschaltgerät für eine Hochdruckgasentladungslampe in einem Kraftfahrzeug mit

   - einem primär getakteten Gleichspannungswandler, bestehend aus einem Wandlertransformator (T), einem primärseitigen Wandlerschalter (Tr) und einer sekundärseitigen Gleichrichterschaltung (C, D)

   - einer dem Gleichspannungswandler nachgeschalteten H-Brückenschaltung (H) und einer Zündschaltung (Z)

   - einem Pulsweitenmodulator (PWM), dessen Ausgangssignal am Steuereingang des primärseitigen Wandlerschalters (Tr) anliegt

   - und einem Regler (R), dessen Regelgröße am Eingang des Pulsweitenmodulators (PWM) anliegt und die Pulsweite des vom Pulsweitenmodulator (PWM) erzeugten Ausgangssignals bestimmt

   **dadurch gekennzeichnet, daß**
   der Gleichspannungswandler eine mit fallender Betriebsspannung (UB) ansteigende Leerlaufausgangsspannung (UA) abgibt.

2. Vorschaltgerät nach Anspruch 1, **dadurch gekennzeichnet, daß** der Regler (R) eine Regelgröße erzeugt, die abhängig von der Differenz zwischen einem Istwert und einem Sollwert ist, wobei der Sollwert ein konstanter Referenzspannungswert (Referenz) ist und der Istwert aus einer Verknüpfung aus der Ausgangsspannung (UA) des Gleichspannungswandlers und der Betriebsspannung (UB) gebildet ist.

3. Vorschaltgerät nach Anspruch 2, **dadurch gekennzeichnet, daß** eine Addierschaltung (A) die Ausgangsspannung (UA) des Gleichspannungswandlers und die Betriebsspannung (UB) gemäß der Beziehung:

$$\text{Istwert} = K * ( UB + UA / n )$$

mit

   K: konstanter Faktor
   n: Übersetzungsverhältnis des Wandlertransformators (T)

zu dem Istwert verknüpft.

**Claims**

1. Power supply unit for a high-pressure discharge light in a vehicle, with

   - a primary timed D.C. transformer comprising a transformer, a primary transformer switch (Tr) and a secondary rectifier circuit (C, D)
   - an H-bridge circuit (H), connected to the output side of the D.C. transformer, and an ignition circuit (I),
   - a pulse-width modulator (PWM), the output signal of which is present at the control input of the primary transformer switch (Tr),
   - and a regulator (R), the extent of regulation of which is effected at the input to the pulse width modulator (PWM), and that determines the pulse width of the output signal produced by the pulse-width modulator (PWM),

      **characterized in that**
      the D.C. transformer gives out a rising, idling, output voltage (OV) with falling operating voltage (OPV).

2. Power supply unit in accordance with claim 1, **characterized in that** the regulator (R) effects an extent of regulation that depends on the difference between an actual value and a required value, whereby the required value is a constant, reference voltage (Ref) and the actual value is formed from a linking of the output voltage (OV) of the D.C. transformer and the operating voltage (OPV).

**3.** Power supply unit in accordance with claim 2, **characterized in that** an adding circuit (A) combines the output voltage (OV) of the D.C. transformer and the operating voltage (OPV), in accordance with the formula:

$$\text{actual value} = K*(OPV + OV/n)$$

where

   K is a constant
   n is the transformer ratio of the transformer (T).

## Revendications

**1.** Ballast pour une lampe à décharge de gaz à haute pression dans un véhicule, comportant

-   un convertisseur continu-continu à cadence primaire, constitué par un transformateur de convertisseur (T), un commutateur de convertisseur côté primaire (Tr) et un circuit redresseur (C, D) côté secondaire,

-   un circuit en pont en H (H) branché en aval du convertisseur continu-continu et un circuit d'allumage (Z),

-   un modulateur de largeur d'impulsion (PWM), dont le signal de sortie est appliqué en entrée de commande du commutateur de convertisseur côté primaire (Tr),

-   et un régulateur (R), dont la grandeur de régulation est appliquée à l'entrée du modulateur de largeur d'impulsion (PWM) et qui détermine la largeur des impulsions du signal de sortie engendré par le modulateur de largeur d'impulsion (PWM),

   **caractérisé en ce que**
   le convertisseur continu-continu fournit une tension de sortie avec entrée en circuit ouvert (UA) augmentant avec la chute de la tension de service (UB).

**2.** Ballast selon la revendication 1, **caractérisé en ce que** le régulateur (R) engendre une grandeur de régulation qui dépend de la différence entre une valeur réelle et une valeur de consigne, la valeur de consigne étant une valeur de tension de référence constante (référence), et la valeur réelle étant formée à partir d'une combinaison de la tension de sortie (UA) du convertisseur continu-continu et de la tension de service (UB).

**3.** Ballast selon la revendication 2, **caractérisé en ce**

qu'un circuit additionneur (A) combine la tension de sortie (UA) du convertisseur continu-continu et la tension de service (UB) pour donner la valeur réelle, selon la relation :

$$\text{valeur réelle} = K * (UB+UA/n)$$

dans laquelle

   K est un facteur constant et
   n est le rapport de conversion du transformateur de convertisseur (T)